(19) Europäisches Patentamt
European Patent Office
Office européen des brevets

(11) Veröffentlichungsnummer: **0 381 620 A2**

(12) **EUROPÄISCHE PATENTANMELDUNG**

(21) Anmeldenummer: **90810051.4**

(51) Int. Cl.5: **C08G 73/10**

(22) Anmeldetag: **23.01.90**

Die Bezeichnung der Erfindung wurde geändert (Richtlinien für die Prüfung im EPA, A-III, 7.3).

(30) Priorität: **01.02.89 CH 377/89**

(43) Veröffentlichungstag der Anmeldung: **08.08.90 Patentblatt 90/32**

(84) Benannte Vertragsstaaten: **BE CH DE FR GB IT LI NL SE**

(71) Anmelder: **CIBA-GEIGY AG**
**Klybeckstrasse 141**
**CH-4002 Basel(CH)**

(72) Erfinder: **Pfaendner, Rudolf, Dr.**
**Sackgasse 3**
**D-6149 Rimbach/Odenwald 1(DE)**

# (54) Verfahren zur Herstellung von vernetzten Produkten und Polymere.

(57) Beschrieben wird ein Verfahren zur Herstellung vernetzter Polymerer durch Erhitzen von ausgewählten Polyamid-Polyimid Blockcopolymeren mit einem mittleren Molekulargewicht $M_n$ von 1'000-50'000. Die Verbindungen sind dadurch gekennzeichnet, dass mindestens 10 Mol%, bezogen auf die Gesamtmenge an Diaminresten in den Polyamid-und Polyimidblöcken, an alkylsubstituierten Diaminodiphenylmethangruppen einkondensiert sind.

Die unvernetzten Verbindungen sind in dipolaren, aprotischen Lösungsmitteln löslich.

EP 0 381 620 A2

# Verfahren zur Herstellung von vernetzten Produkten und neue Polymere

Die vorliegende Erfindung betrifft ein Verfahren zur Herstellung von vernetzten Produkten und neue Polyamid-Polyimid-Blockcopolymere (im folgenden PAPI Blockcopolymere genannt), die zur Herstellung dieser Produkte verwendet werden können.

PAPI Blockcopolymere sind an sich bekannt und beispielsweise in der DE-A-2,342,464 beschrieben. Diese eignen sich wegen ihrer guten elektrischen, thermischen und/oder mechanischen Eigenschaften beispielsweise als Matrixharze für die Herstellung von Verbundwerkstoffen, als Beschichtungsharze in der Elektro- und Elektronik-Industrie, als flexible Laminierharze, als Klebfilme oder als Pressmassen. Uebliche PAPI Blockcopolymere sind in organischen Lösungsmitteln unlöslich oder nur wenig löslich, wie z.B. aus der US-A-4,503,285 bekannt ist. Daher muss zur Ausnützung der guten Eigenschaften der PAPI Blockcopolymeren im allgemeinen von der gut löslichen Vorstufe, den Polyamid-Polyamidsäure Blockcopolymeren ausgegangen werden. Diese Vorgehensweise ist in mancher Hinsicht nicht befriedigend. Zum einen sind die löslichen Vorprodukte in der Regel nur bedingt lagerstabil, da die durch Ringschluss entstehende Wassermenge zu einem Molekulargewichtsabbau und/oder der Ringschluss zu einem Ausfällen des Polymeren führt. Wird ausserdem die Imidisierung erst bei der Verarbeitung durchgeführt, so kann das entstehende Produkt infolge des austretenden Wassers Fehlstellen, wie Löcher und/oder Blasen aufweisen.

Es besteht daher der Wunsch nach löslichen PAPI Blockcopolymeren, die diese Nachteile nicht besitzen. Solche Polymeren sind bereits in der JP-A-62/30,121 und in der EP-A-260,709 beschrieben. Die vorbekannten Verbindungen sind durch die Verwendung vierkerniger aromatischer Diamineinheiten in den Polyamid- und den Polyimidblöcken oder durch die Anwesenheit von Polyamidimideinheiten in den Polyimidblöcken gekennzeichnet.

Solche löslichen PAPI Blockcopolymere besitzen Vorteile bei der Verarbeitung und können als Lösungen oder als Feststoffe nahezu unbegrenzt gelagert werden. In organischen Lösungsmitteln lösliche PAPI Blockcopolymere weisen andererseits den Nachteil auf, von solchen Lösungsmitteln angegriffen zu werden. Es ist also ein lösliches PAPI Blockcopolymer wünschenswert, das nach seiner Applikation aus der Lösung in einem nachfolgenden Schritt gegen einen Lösungsmittelangriff stabilisiert werden kann.

Aus der EP-A-134,752 sind strahlungsvernetzbare Polymere bekannt. Kennzeichnend für diese Verbindungen ist die Anwesenheit einer Diimideinheit auf Basis von Benzophenontetracarbonsäure und aliphatischen, cycloaliphatischen, araliphatischen oder substituierten aromatischen Aminresten. Diese Diimideinheiten können neben Polyimiden auch in anderen Polymeren, unter anderem auch in PAPI Blockcopolymeren eingebaut sein.

Es wurde jetzt gefunden, dass man lösliche PAPI Blockcopolymere thermisch vernetzen kann, wenn diese Verbindungen einen gewissen Gehalt an alkylsubstituierten Diaminodiphenylmethanresten aufweisen. Diese Tatsache ist als überraschend anzusehen, da die in der EP-A-134,752 beschriebenen Polyimide wohl strahlungsvernetzbar aber nicht in jedem Falle thermisch vernetzbar sind. Ausserdem ist die Vernetzbarkeit bei den erfindungsgemässen PAPI Blockcopolymeren nicht an das Vorhandensein einer Benzophenontetracarbonsäureeinheit gebunden.

Mit dem erfindungsgemässen Verfahren lassen sich auf vorteilhafte Weise Beschichtungen mit grossen Schichtdicken oder auch Formkörper herstellen, da die thermische Härtung innerhalb des gesamten härtbaren Materials gleichmässig erfolgt.

Die vorliegende Erfindung betrifft ein Verfahren zur Herstellung von vernetzten Polyamid-Polyimid Blockcopolymeren, dadurch gekennzeichnet, dass man ein lösliches Polyamid-Polyimid Blockcopolymer mit einem mittleren Molekulargewicht $M_n$ von 1'000-50'000, insbesondere von 5'000-40'000, enthaltend Kombinationen von Blöcken der Formeln Ia mit IIb und/oder IIc oder der Formeln Ib mit IIa und/oder IIc oder der Formeln Ic mit IIa und/oder IIb auf Temperaturen oberhalb des Glasumwandlungspunktes erhitzt

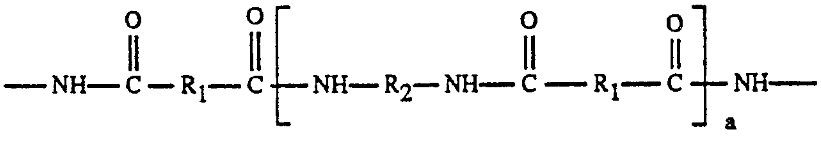 (Ia),

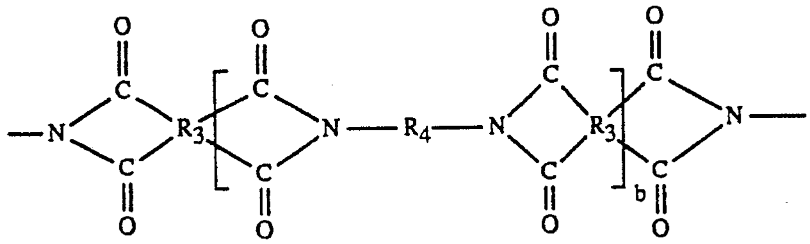 (Ib),

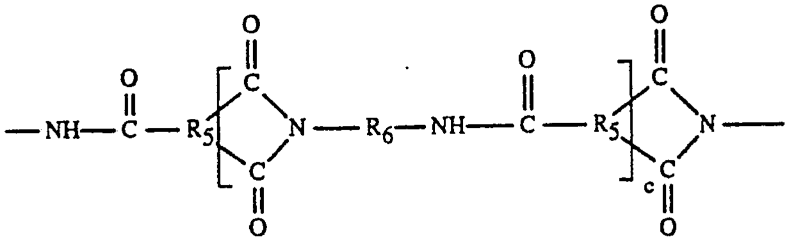 (Ic),

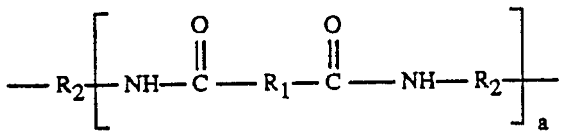 (IIa),

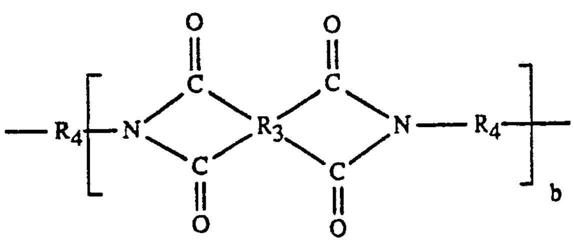 (IIb),

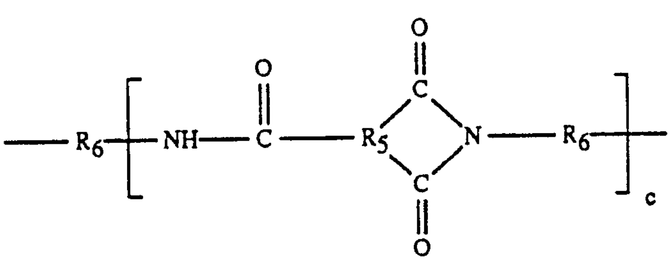 (IIc),

worin die Indizes a, b und c unabhängig voneinander ganze Zahlen von 1 bis 100 sind, $R_1$ ein Rest der Formeln $-C_nH_{2n}-$,

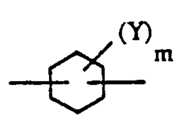, 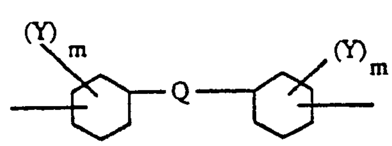,

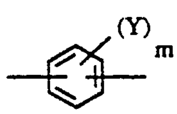, 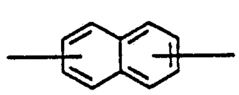 oder 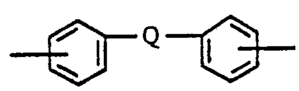

ist, n eine ganze Zahl von 2 bis 12 bedeutet, m eine ganze Zahl von 0 bis 4 ist, Y Alkyl oder Halogen ist oder worin jeweils zwei zueinander ortho-ständige Reste Y zusammen eine Alkylengruppe bilden, Q eine direkte Bindung darstellt $-CH_2-$, $-CH_2-CH_2-$, $-CH(CH_3)-$, $-C(CH_3)_2-$, $-C(CF_3)_2-$, -O-, -S-, $-SO_2-$ oder -CO- bedeutet, $R_2$ ein Rest der Formeln $-C_nH_{2n}-$,

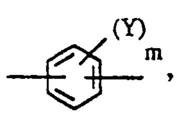, 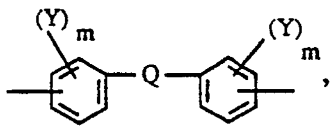, 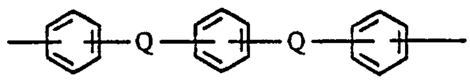,

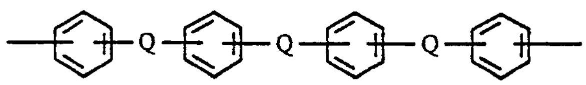, 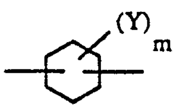, 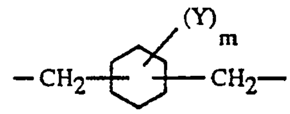,

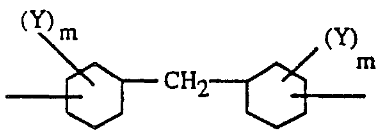, 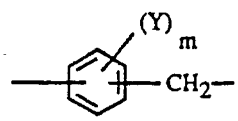 oder 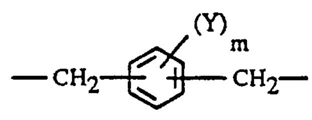

ist, n, m, Q und Y eine der oben definierten Bedeutungen besitzen, $R_3$ ein Rest der Formeln

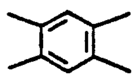 oder 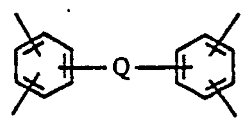

ist, worin Q eine der oben angegebenen Bedeutungen besitzt, $R_5$ ein Rest der Formel

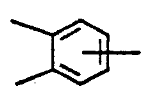

ist, und $R_4$ und $R_6$ unabhängig voneinander eine der für $R_2$ definierten Bedeutungen besitzen, mit der Massgabe, dass 10-100 Mol %, bevorzugt 25-100 Mol %, insbesondere 50-100 Mol %, aller Reste $R_2$, $R_4$ und $R_6$, bezogen auf die Gesamtmenge dieser Reste, die Formel

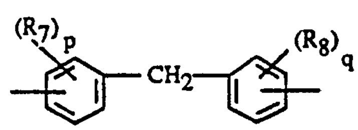

aufweisen, worin p 1 oder 2 und q 0, 1 oder 2 ist, $R_7$ und $R_8$ Alkyl bedeuten oder worin je zwei zueinander ortho-ständige Reste $R_7$ und $R_8$ jeweils zusammen eine Alkylengruppe bilden.

Unter dem Begriff "lösliches PAPI Blockcopolymer" wird im allgemeinen ein in dipolaren, aprotischen Lösungsmitteln lösliches Copolymeres verstanden, aus dem sich Lösungen enthaltend mindestens 5 Gew.%, insbesondere mindestens 10 Gew.% an PAPI Blockcopolymer, bezogen auf die Lösung, herstellen lassen.

Die Temperaturen für den Vernetzungsschritt sind im allgemeinen, je nach verwendetem Copolymeren, unterschiedlich. Die Begriffe, "Glasumwandlungspunkt" oder "Glasumwandlungstemperatur" (= $T_g$ Wert) beziehen sich im Rahmen dieser Beschreibung auf die Werte des Polymeren in der jeweiligen Formulierung. Dabei kann es sich um Werte handeln, die auch unterhalb der Werte für das reine Polymere liegen. So können beispielsweise lösungsmittel- und/oder weichmacherhaltige Polymere $T_g$ Werte aufweisen, die unterhalb der Werte für das reine Polymere liegen. $T_g$ Werte lassen sich beispielsweise durch Differential Scanning Calorimetry (DSC) bestimmen, wobei hier der "onset Wert" [= Schnittpunkt der verlängerten Basislinie mit der Tangente an die Messkurve im Bereich des steilsten Anstiegs] Verwendung findet.

Das Verhältnis von Polyamidblöcken zu Polyimidblöcken in den erfindungsgemäss eingesetzten Copolymeren wird im allgemeinen durch die gewünschte Löslichkeit dieses Copolymeren in dipolaren, aprotischen Lösungsmitteln und durch die Vernetzungsdichte im gewünschten Endprodukt bestimmt. Die jeweiligen Anteile dieser Blöcke werden so gewählt, dass das Blockcopolymere in dipolaren, aprotischen Lösungsmitteln löslich ist.

Das bevorzugte Verhältnis von Amidgruppen zu Imidgruppen in den erfindungsgemäss eingesetzten Copolymeren beträgt 4:1 bis 1:4.

Die mittleren Molekulargewichte $M_n$ in den Polyamidblöcken Ia und IIa oder in den Polyimidblöcken Ib und IIb oder in den Polyamidimidblöcken Ic und IIc betragen im allgemeinen 300 bis 20'000, vorzugsweise 500 bis 10'000.

Neben den oben erwähnten Kombinationen von zwei Blöcken können die erfindungsgemäss eingesetzten PAPI Blockcopolymeren auch Dreiblockkombinationen der Formeln Ia, Ib und IIc oder der Formeln Ia, Ic und IIb oder der Formeln Ib, Ic und IIa enthalten.

Bevorzugt verwendet man PAPI Blockcopolymere, die im wesentlichen aus Polyamidblöcken Ia und Polyimidblöcken IIb oder aus Polyamidblöcken IIa und Polyimidblöcken Ib bestehen.

Der Index n ist vorzugsweise 6 bis 12 und der Index m ist bevorzugt 0 oder 1, insbesondere 0.

Ein Alkylsubstituent Y, $R_7$ oder $R_8$ in den obenstehenden Formeln kann verzweigt oder bevorzugt geradkettig sein. Bevorzugt wird geradkettiges $C_1$-$C_6$Alkyl. Beispiele dafür sind Methyl, Ethyl, n-Propyl, n-Butyl, n-Pentyl und n-Hexyl. Besonders bevorzugt werden Methyl und Ethyl.

Bilden je zwei Reste Y, $R_7$ oder $R_8$ zusammen eine Alkylenkette, so handelt es sich dabei vorzugsweise um Tri- oder insbesondere um Tetramethylen.

Y als Halogen ist vorzugsweise Chlor oder Brom.

In den obenstehenden Formeln bedeutet $R_1$ beispielsweise 1,3-Phenylen, 1,4-Phenylen, 2,4-Tolylen, 1,5-Naphthylen, 1,8-Naphthylen, 2,6-Naphthylen, 4,4'-Biphenylen,

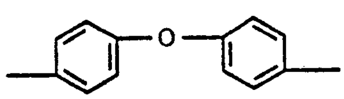 oder 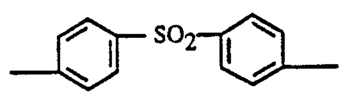 .

Bevorzugter Rest $R_1$ ist 1,3-Phenylen.

Bedeuten $R_1$, $R_2$, $R_4$ oder $R_6$ eine Gruppe $-C_nH_{2n}-$, so handelt es sich dabei beispielsweise um 1,2-Ethylen, 1,2-Propylen, 1,3-Propylen, 2,2-Propyliden, 1,4-Tetramethylen, 1,5-Pentamethylen, 1,6-Hexamethylen, 1,7-Heptamethylen, 1,8-Octamethylen, 1,9-Nonamethylen, 1,10-Decamethylen, 1,12-Dodecamethylen, 2,9-Decamethylen oder 2-Methyl-1,5-pentamethylen.

Sind $R_1$, $R_2$, $R_4$ oder $R_6$ eine Gruppe

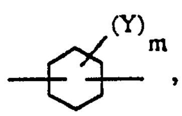 ,

so kann es sich dabei um 1,2-, 1,3-oder vorzugsweise um 1,4-Cyclohexylen handeln.

Weitere Beispiele für spezifische cycloaliphatische Gruppen $R_2$ und/oder $R_4$ und/oder $R_6$ sind

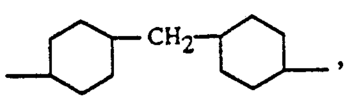 , 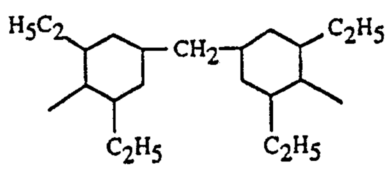 ,

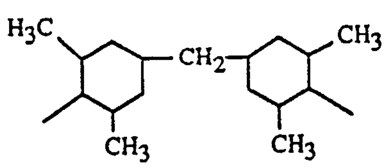 , 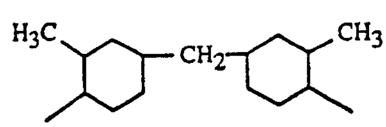 ,

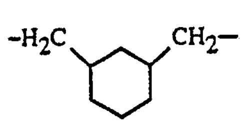 oder 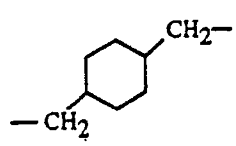 .

Beispiele für spezifische araliphatische Gruppen $R_2$ und/oder $R_4$ und/oder $R_6$ sind 1,3-Xylylen,

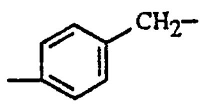 oder 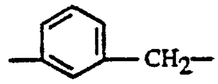 .

Beispiele für spezifische aromatische Gruppen $R_2$ und/oder $R_4$ und/oder $R_6$ sind 1,2-Phenylen, 1,3-Phenylen, 1,4-Phenylen, 2,4-Tolylen, 4-Chlor-1,3-phenylen, 2,5-Dichlor-1,4-phenylen oder eine der folgenden Gruppen

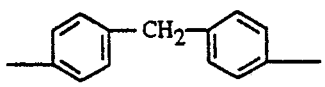 , 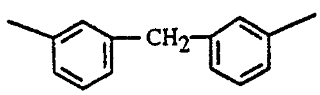 , 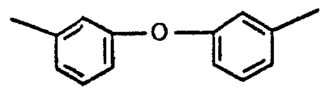 ,

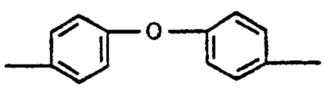 , 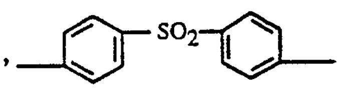 , 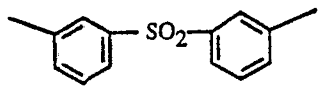 ,

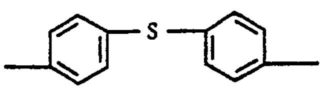 , 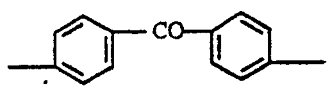 , 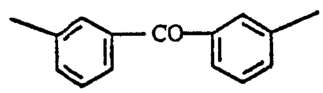 ,

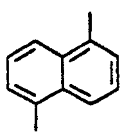 , 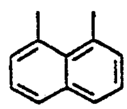 , 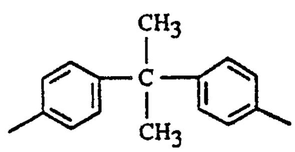 , 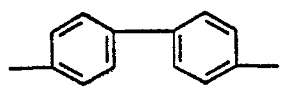

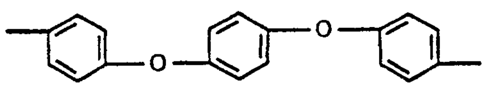 , 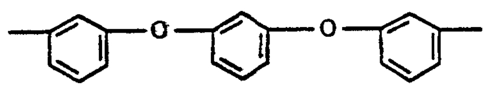 ,

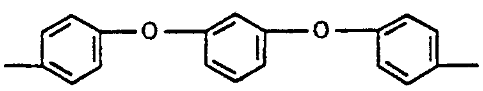 , 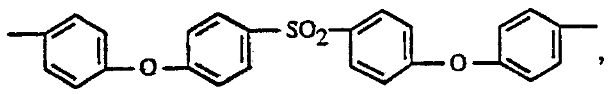 ,

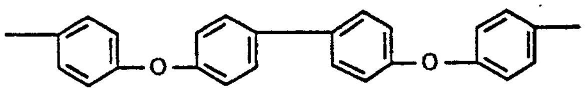 ,

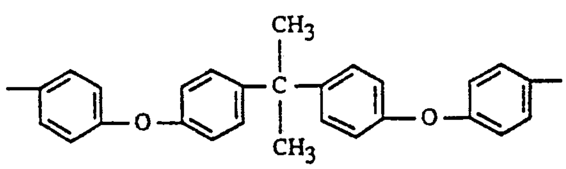 , 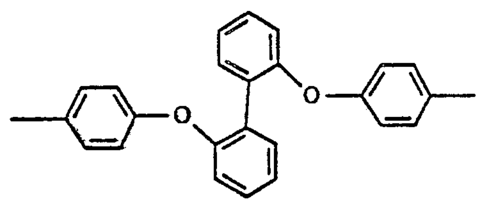 .

Die bevorzugten alkylsubstituierten Reste des Diaminodiphenylmethans weisen im allgemeinen mindestens in einer, bevorzugt in zwei ortho-Positionen zur Aminogruppe, Alkylsubstituenten auf. Dabei handelt es sich insbesondere um Gruppen der Formeln

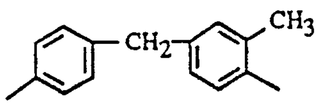 , 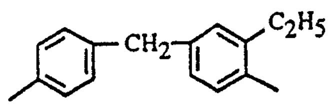 , 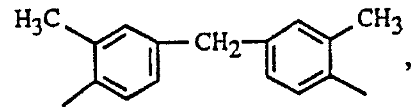 ,

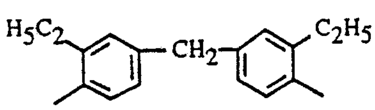 , 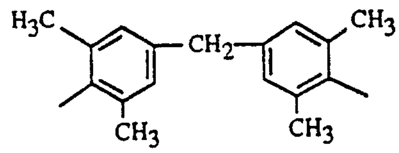 ,

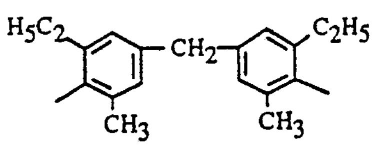 , 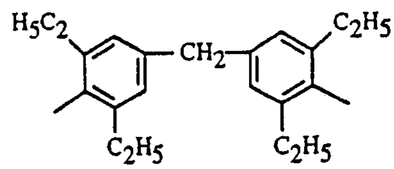 ,

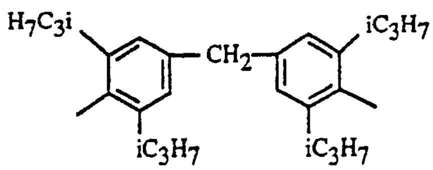 und 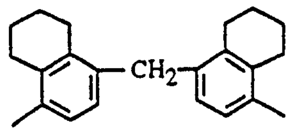 .

Bevorzugte Reste $R_2$ und/oder $R_4$ und/oder $R_6$ sind 1,3-Phenylen,

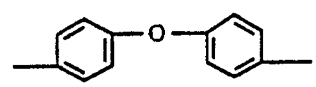 ,

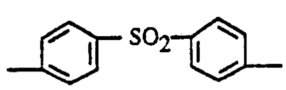 , 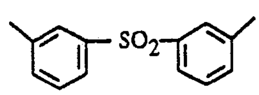 , 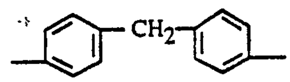 ,

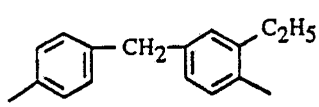 , 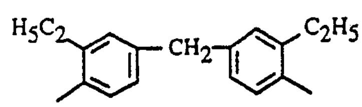 und

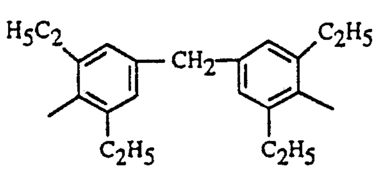 .

Es hat sich gezeigt, dass die Thermostabilität der erfindungsgemäss eingesetzten PAPI Blockcopolymeren und der daraus erhältlichen vernetzten Produkte besonders gut ist, wenn diese einen hohen Anteil an aromatischen Resten besitzen. Man verwendet daher bevorzugt PAPI Blockcopolymere, die überwiegend aromatische oder araliphatische Reste aufweisen, etwa solche wie sie oben beispielhaft für $R_1$ bis $R_6$ aufgezählt sind.

Enthalten die Reste $R_1$, $R_2$, $R_3$, $R_4$ oder $R_6$ ein Brückenglied Q, so handelt es sich dabei bevorzugt um $-CH_2-$, $-C(CH_3)_2-$, -O-, $-SO_2-$ oder -CO-.

Enthält ein Rest $R_2$, $R_4$ oder $R_6$ mehrere Brückenglieder Q, so können diese gleich oder verschieden sein.

Der vierwertige Rest $R_3$ leitet sich von einer ausgewählten Tetracarbonsäure ab, die in der Lage ist, ein Dianhydrid zu bilden.

Dabei handelt es sich bevorzugt um Reste der Formeln

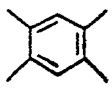 und insbesondere um 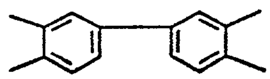 oder 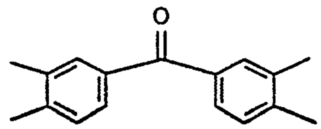 .

Der Anteil der alkylsubstituierten Diaminodiphenylmethanreste in den erfindungsgemäss eingesetzten Verbindungen beträgt vorzugsweise mehr als 50 Mol %, insbesondere etwa 100 Mol %, bezogen auf den Anteil der Diaminreste in diesen Polymeren.

Lösliche Polyamid-Polyimid Blockcopolymere mit einem mittleren Molekulargewicht $M_n$ von 1'000-50'000 enthaltend Kombinationen von Blöcken der oben definierten Formeln Ia mit IIb und/oder IIc oder der Formeln Ib mit IIa und/oder IIc oder der Formeln Ic mit IIa und/oder IIb sind mit Ausnahme der Verbindungen, worin $R_3$ ein Rest der Benzophenontetracarbonsäure ist, neu und stellen ebenfalls einen Gegenstand der vorliegenden Erfindung dar.

Die Herstellung der erfindungsgemäss eingesetzten Blockcopolymeren erfolgt auf an sich bekannte Weise, und kann beispielsweise nach einer der in der DE-A-2,342,464 beschriebenen Arbeitsweisen durch Umsetzung vorgeformter Polyamid- und Polyamidsäureblöcke und anschliessende Cyclisierung der Polyamid-Polyamidsäure erfolgen.

Eine weitere Herstellungsmethode umfasst die Umsetzung von Polyamidsäuren der Formel IIIa und/oder IIIb

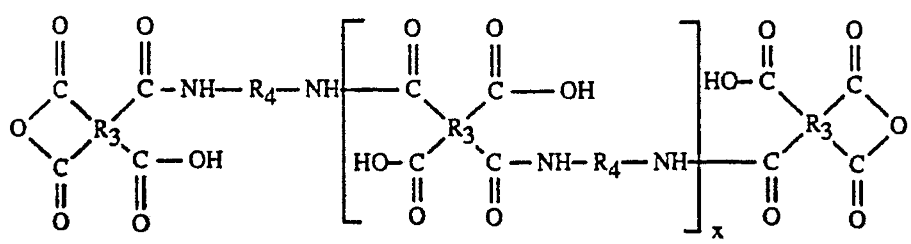 (IIIa)

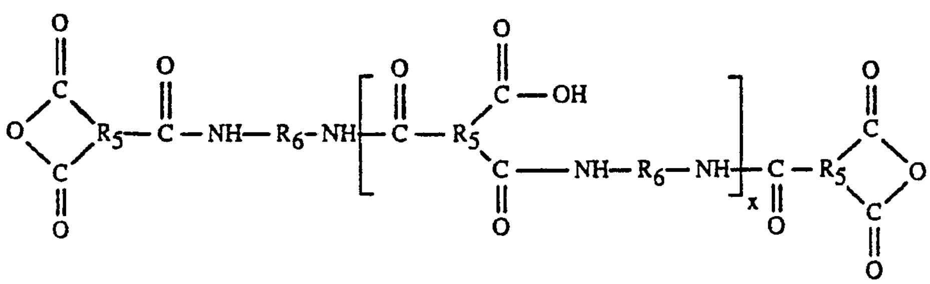 (IIIb)

mit Diaminen der Formel IV

$H_2N\text{-}R_2\text{-}NH_2$ (IV),

und mit Dicarbonsäurechloriden der Formel V

$Cl\text{-}OC\text{-}R_1\text{-}CO\text{-}Cl$ (V)

und die anschliessende Cyclisierung der so erhaltenen Polyamid-Polyamidsäure Blockcopolymeren. In den Formeln IIIa, IIIb, IV und V haben die Symbole $R_1$, $R_2$, $R_3$, $R_4$, $R_5$ und $R_6$ die oben angegebene Bedeutung und x steht für eine ganze Zahl $\geq 0$, bevorzugt für $\geq 1$.

Die Herstellung der Polyamidsäuren der Formeln IIIa bzw. IIIb ist ebenfalls an sich bekannt und erfolgt beispielsweise durch die Umsetzung von Tetracarbonsäureanhydriden der Formel VIa bzw. von Tricarbonsäureanhydriden VIb oder einem entsprechenden Tricarbonsäureanhydridchlorid

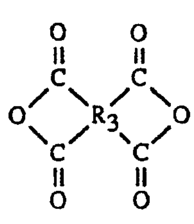 (VIa), 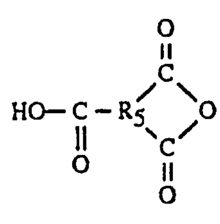 (VIb)

worin $R_3$ und $R_5$ die oben angegebene Bedeutung haben, mit einem Unterschuss eines Diamins der Formel IV.

Die Ausgangsprodukte der Formeln IV, V, VIa und VIb sind an sich bekannt und teilweise im Handel erhältlich.

Die alkylsubstituierten Diaminodiphenylmethane sind beispielsweise in der EP-A-134,752 oder in der EP-A-132,221 beschrieben.

Durch Wahl der geeigneten Reaktionsbedingungen, wie z.B. durch geeignete Wahl der Molverhältnisse der Reaktionspartner, lassen sich die gewünschten mittleren Molekulargewichte der einzelnen Blöcke einstellen. Diese Auswahl ist dem Fachmann an sich bekannt.

Die Polykondensation der Di-, Tri- oder Tetracarbonsäurederivate der Formeln IIIa, IIIb, V, VIa oder VIb mit den Diaminen der Formel IV kann auf an sich bekannte Weise vorgenommen werden, vorzugsweise in einem wasserfreien organischen Lösungsmittel und unter Feuchtigkeitsausschluss, z.B. unter Stickstoff bei Temperaturen zwischen -20 °C und +50 °C, insbesondere etwa -15 °C bis +10 °C.

Geeignete organische Lösungsmittel sind beispielsweise N,N-Dimethylacetamid, N,N- Diethylacetamid, N,N-Dimethylformamid, N-Methyl-2-pyrrolidon (NMP), N-Acetyl-2-pyrrolidon, N-Methyl-ε-caprolactam, N,N,N′,N′-Tetramethylharnstoff, Tetrahydrothiophendioxid (Sulfolan) und Dimethylsulfoxid.

Die Reaktion kann auch in Gemischen solcher Lösungsmittel durchgeführt werden. Andererseits ist es auch möglich, diese bevorzugten Lösungsmittelsysteme mit anderen organischen aprotischen Lösungsmitteln, wie aromatischen, cycloaliphatischen oder aliphatischen, gegebenenfalls chlorierten Kohlenwasserstoffen, beispielsweise Toluol, Xylolen, Cyclohexan, Pentan, Hexan, Petrolether, Dichlormethan, Tetrahydrofuran, Cyclohexanon und Dioxan, zu verdünnen.

Die Polyamidblöcke können auch mittels Grenzflächen-Polykondensation hergestellt werden.

Nach Beendigung der Umsetzung lassen sich die Lösungsmittel gewünschtenfalls auf übliche Weise entfernen, beispielsweise durch Abdestillieren, gegebenenfalls unter vermindertem Druck. Die Polyamid-Polyamidsäure Blockcopolymeren können, falls gewünscht, nach an sich bekannten Methoden durch Eingiessen der Reaktionslösung in ein Fällungsmittel, wie Wasser oder aliphatische Kohlenwasserstoffe, z.B. in Petrolether, besonders jedoch in Methanol, Isopropanol, Aceton, beidseitige Ether des Mono-, Di- oder Triethylenglykols oder Acetonitril, ausgefällt und gegebenenfalls getrocknet werden.

Die Cyclisierung der Polyamid-Polyamidsäure Blockcopolymeren zu den entsprechenden PAPI Blockcopolymeren erfolgt, indem man die Polyamid-Polyamidsäure Blockcopolymeren vorzugsweise ohne vorherige Isolation, d.h. direkt in der oben beschriebenen Reaktionslösung auf Temperaturen zwischen 50 und 250 °C erhitzt oder mit einem Dehydratisierungsmittel allein oder im Gemisch mit einem tertiären Amin behandelt. In Frage kommen z.B. Essigsäureanhydrid oder Propionsäureanhydrid oder ein Gemisch aus Essigsäureanhydrid und Triethylamin oder Pyridin. Verfahren diser Art sind beispielsweise in der US-A-3,894,114, der US-A-4,124,651 oder der US-A-4,503,285 beschrieben.

Die erfindungsgemäss eingesetzten Blockcopolymeren können auch hergestellt werden, indem in an sich bekannter Weise zuerst ein Polyamidblock oder ein Polyamidimidblock aufgebaut wird und anschliessend durch Umsetzung mit Tetracarbonsäureanhydrid und Diamin das Polyamid-Polyamidsäure Blockcopolymere hergestellt wird, das anschliessend cyclisiert wird.

Die erfindungsgemäss eingesetzten PAPI Blockcopolymeren besitzen eine für die eingangs erwähnte Problemstellung gute Löslichkeit in aprotischen, dipolaren Lösungsmitteln. Sehr gute Löslichkeiten können beispielsweise in N,N-Dimethylacetamid, N,N-Dimethylformamid, N,N-Dimethylacetamid, N-Methyl-2-pyrrolidon, Sulfolan, Dimethylsulfoxid oder γ-Butyrolacton gegebenenfalls unter Erwärmen erzielt werden.

Es ist zu erwähnen, dass im allgemeinen eine hohe Konzentration der polymeren Verbindungen erwünscht ist. Die so hergestellten Lösungen sind im Gegensatz zur Polyamidsäure-Polyamidvorstufe lagerstabil. Das gleiche gilt natürlich auch für den Feststoff selbst.

Auf diese Weise gelingt die Herstellung von Lösungen, welche im wesentlichen frei von Nebenprodukten und Monomerresten sind. Die Verarbeitung erfolgt äusserst einfach, da kein Cyclisierungsschritt zu durchlaufen ist und damit keine Wasserabspaltung erfolgt, welche zu unerwünschten Effekten und Schädigung des Endprodukts führt. Bei der erfindungsgemässen Anwendung der PAPI Blockcopolymeren muss lediglich das Lösungsmittel entfernt werden und es gelingt die Herstellung von Produkten hoher Qualität und hoher thermischer Stabilität mit der Möglichkeit zu hohen Gebrauchstemperaturen.

In einem Folgeschritt oder gleichzeitig mit dem Entfernen des Lösungsmittels lassen sich die PAPI Blockcopolymeren durch Erhitzen vernetzen. Die Temperaturen für den Vernetzungsschritt sind im allgemeinen, je nach verwendetem Copolymeren, unterschiedlich. In der Regel erhitzt man die Copolymeren oberhalb ihrer Glasumwandlungstemperatur oder, im Falle von mehreren Glasumwandlungstemperaturen, oberhalb ihrer niedrigsten, vorzugsweise oberhalb ihrer höchsten Glasumwandlungstemperatur. In der Regel erfolgt die Vernetzung bei Temperaturen zwischen 250 und 350 °C.

Mit dem erfindungsgemässen Verfahren lassen sich durch Erhitzen vernetzte Produkte mit ausgezeichneter Lösungsmittelresistenz herstellen. Die Erfindung betrifft also auch die durch dieses Verfahren erhältlichen vernetzten Produkte.

Die definitonsgemässen Blockcopolymeren zeichnen sich durch eine gute Verarbeitbarkeit aus und können zur Herstellung von industriellen Erzeugnissen, wie Fasern, faserverstärkten Verbundwerkstoffen, Schichtkörpern, Giesskörpern, Laminaten, Matrixharzen, Honeycomb-Core Materialien, Lacken, Klebstoffen, Schaumstoffen, Ueberzugsmassen, Filmen (Folien), Press- und Sinterpulvern und Presskörpern verwendet werden.

Insbesondere lassen sich die definitionsgemässen Blockcopolymeren zur Herstellung von Beschichtungen, Folien und flexiblen Laminaten oder als Klebstoffe, Matrixharze oder Pressmassen verwenden.

Dazu können den Blockcopolymeren vor dem Vernetzungsschritt übliche Zusatzstoffe zugegeben werden, wie Pigmente, Füllstoffe, elektrische Leiter, wie beispielsweise Russ oder Metallpartikel, Mittel zur Erhöhung der Abriebfestigkeit, Schmiermittel oder verstärkende Fasern, wie Kohlenstoff-, Bor- oder Glasfasern.

Schichtkörper, welche durch das erfindungsgemässe Verfahren erhältlich sind, können gegebenenfalls mit die Oberflächeneigenschaften verbessernden Ueberzugsschichten, z.B. aus Phenolharzen, Aluminium, versehen werden und finden unter anderem im Flugzeugbau Verwendung.

Definitionsgemässe Blockcopolymere, vorzugsweise in Form von Lösungen, können auch als Ueberzugsmassen und Klebstoffe gegebenenfalls unter Zusatz von Pigmenten, wie Titandioxid, üblichen Füll- und Schaumstoffen, zum Beschichten und Ueberziehen von Substraten der verschiedensten Art in beliebiger Form, wie Folien, Fasern, Faservliesen, Drähten, gitterförmigen Strukturen, Geweben, Schaumstoffen, verwendet werden.

Als geeignete Substrate seinen erwähnt: Metalle oder Legierungen, wie Kupfer, Messing, Aluminium, Eisen oder Stahl; Asbest- oder Glasfasermaterialien; Polymere, wie Cellulosematerialien (Celluloseester oder -ether, Papier); Perfluorkohlenstoffpolymere, z.B. Polytetrafluorethylen, Polyolefine, Polyester, Polyamide, Polyimide oder Polyurethane.

Die folgenden Beispiele erläutern die Erfindung.

Synthesebeispiel 1:

Polyamidsäureblock:

In einem Doppelmantelreaktionsgefäss mit Schutzgasanschluss, Innenthermometer, Tropftrichter und Rührer werden unter Stickstoff 95,70 g (0,2970 Mol) 3,3′,4,4′-Benzophenontetracarbonsäuredianhydrid und 237 g N-Methylpyrrolidon (NMP) eingewogen. Das Reaktionsgefäss wird dreimal evakuiert und mit Stickstoff begast. Nach dem Abkühlen auf -10 °C ergibt sich eine Suspension. Über den Tropftrichter wird bei -15 °C im Verlauf von 35 Minuten eine Lösung von 58,0 g eines technischen Gemisches aus 4,4′-Diaminodiphenylmethan, 3-Ethyl-4,4′-diaminodiphenylmethan und 3,3′-Diethyl-4,4′-Diaminodiphenylmethan (Aminzahl 8,34 meq/g ≙ M 234 = 0,2447 Mol) in 317 g NMP zugegeben. Danach lässt man die Reaktionsmischung auf Raumtemperatur kommen und rührt 2 Stunden nach.

Polyamid-Polyamidsäure-Blockcopolymeres:

Die klare Reaktionsmischung wird erneut abgekühlt (-10 °C). Über den Tropftrichter werden sodann 116,0 g des oben beschriebenen Diamingemisches (0,4957 Mol) in 633 g NMP im Verlauf von 40 Minuten zugetropft. Im folgenden werden 90,45 g (0,4455 Mol) Isophthalsäuredichlorid portionsweise zugegeben, so dass die Innentemperatur 0 °C nicht übersteigt. Man benötigt etwa 120 Minuten, wobei die Lösung in zunehmendem Masse viskos wird. Schliesslich wird die Polymerlösung bei Raumtemperatur 30 Minuten gerührt. Man setzt weitere 0,23 g (0,0011 Mol) Isophthalsäuredichlorid zu und rührt 1 Stunde zur Vervollständigung der Polykondensation. Danach gibt man über einen Tropftrichter im Verlauf von 15 Minuten 67,95 g (0,9423 Mol) Butylenoxid zu (Innentemperatur 22 °C). Man erhält auf diese Weise eine Lösung eines Polyamid-Polyamidsäure Blockcopolymeren mit einer inhärenten Viskosität von 0,45 dl/g (0,5 Gew.-% an Feststoff in NMP/25 °C).

Cyclisierung:

Die nun vorliegende Polyamid-Polyamidsäure Blockcopolymeren-Lösung wird nun der chemischen Cyclisierung zum Polyamid-Polyimid-Blockcopolymeren unterzogen. Dazu erfolgt über einen Tropftrichter die Zugabe eines Gemisches aus 116,0 g (1,1365 Mol) Triethylamin und 115,0 g (1,1361 Mol) Acetanhydrid innerhalb von 20 Minuten bei 25 °C. Man lässt nun weitere 8 Stunden bei Raumtemperatur rühren. Die inhärente Viskosität (0,5% Feststoff, NMP, 25 °C) eines so hergestellten Polyamid-Polyimid-Blockcopolymeren beträgt 0,40 dl/g.

Ein Teil der oben beschriebenen Lösung wird mit der gleichen Menge NMP verdünnt, in der 10fachen Menge Isopropanol ausgefällt und im Trockenschrank unter Vakuum (10 mbar) getrocknet. Die Temperatur wird dabei innerhalb von 72 Stunden stufenweise auf 200 °C erhöht und bei dieser Temperatur 16 Stunden belassen. Die inhärente Viskosität (0,5%, NMP, 25 °C) des Polymeren beträgt (0,49 dl/g. Das Polymere ist nach diesem Trockenprozess zu mehr als 25% in NMP löslich.

Ein Teil des so erhaltenen Polyamid-Polyimid-Blockcopolymeren wird zusätzlich 60 Minuten im Vakuum auf 320 °C erwärmt. Nach dieser zusätzlichen Temperaturbehandlung ist das Polymere nahezu vollständig in NMP unlöslich.

Die in der folgenden Tabelle angegebenen Beispiele 2 - 14 für lösliche Polyamid-Polyimid-Blockcopolymere werden wie unter Beispiel 1 beschrieben hergestellt. In der Tabelle werden die folgenden Abkürzungen verwendet:

$\eta_{inh}$: Inhärente Viscosität gemessen an einer 0,5 gew.%igen Lösung des Polymeren bei 25 °C (in NMP),
BTDA: 3,3′,4,4′-Benzophenontetracarbonsäuredianhydrid,
BPDA: 3,3′,4,4′-Biphenyltetracarbonsäuredianhydrid,
IPC: Isophthalsäuredichlorid,
TMAC: Trimellitsäureanhydridchlorid,
BADM: Bis-(3,5-diethyl-4-aminophenyl)-methan,
BEMA: Bis-(3-ethyl-5-methyl-4-aminophenyl)-methan,
BIDM: Bis-(3,5-diisopropyl-4-aminophenyl)-methan,
mDDS: 3,3′-Diaminodiphenylsulfon,
pDDS: 4,4′-Diaminodiphenylsulfon,
Diamingemisch: Technisches Produkt bestehend aus 4,4′-Diaminodiphenylmethan, 3-Ethyl-4,4′-diaminodiphenylmethan und aus 3,3′-Diethyl-4,4′-diaminodiphenylmethan.

<u>Tabelle:</u> Polyamid-Polyimid-Blockcopolymere, die analog Beispiel 1 hergestellt wurden

| Nr. | PI - Block<br>Tetracarbonsäure-dianhydrid | PI - Block<br>Diamin | PA - Block<br>Dicarbonsäure-dichlorid | PA - Block<br>Diamin | $\eta_{inh}$ [dl/g] PAPAS | Temp. 200°C<br>$\eta_{inh}$ [dl/g] PAPI | Temp. 200°C<br>Löslichkeit in NMP [%] | Temp. 320°C<br>$\eta_{inh}$ [dl/g] PAPI | Temp. 320°C<br>Löslichkeit in NMP [%] |
|---|---|---|---|---|---|---|---|---|---|
| 1<br>Mol | BTDA<br>0,2970 | Diamingemisch<br>0,2447 | IPC<br>0,4455 | Diamingemisch<br>0,4957 | 0,45 | 0,49 | > 25 | - | < 0,5 |
| 2<br>Mol | BTDA<br>0,2815 | Diamingemisch<br>0,2470 | IPC<br>0,2177 | Diamingemisch<br>0,2470 | 0,35 | 0,41 | > 25 | - | < 0,5 |
| 3<br>Mol | BTDA<br>0,2002 | Diamingemisch<br>0,3566 | IPC<br>0,0643 | Diamingemisch<br>0,1585 | 0,33 | 0,49 | > 25 | - | < 0,5 |
| 4<br>Mol | BTDA<br>0,1551 | pDDS<br>0,1292 | IPC<br>0,2326 | Diamingemisch pDDS<br>0,1292 0,1292 | 0,33 | 0,28 | > 25 | 0,38 | ~ 1 |
| 5<br>Mol | BTDA<br>0,1500 | mDDS pDDS Diamingemisch<br>0,0417 0,0417 0,0417 | IPC<br>0,2275 | Diamingemisch mDDS pDDS<br>0,0833 0,0833 0,0833 | 0,52 | 0,52 | > 25 | - | < 0,5 |
| 6<br>Mol | BTDA<br>0,1500 | mDDS pDDS BADM<br>0,0417 0,0417 0,0417 | IPC<br>0,2275 | BADM mDDS pDDS<br>0,0833 0,0833 0,0833 | 0,38 | 0,38 | > 25 | 0,40 | ~ 1 |
| 7<br>Mol | BTDA<br>0,1500 | mDDS pDDS BIDM<br>0,0417 0,0417 0,0417 | IPC<br>0,2275 | BIDM mDDS pDDS<br>0,0833 0,0833 0,0833 | 0,36 | 0,36 | > 25 | 0,45 | ~ 1 |
| 8<br>Mol | BPDA<br>0,1500 | Diamingemisch<br>0,1250 | IPC<br>0,2275 | Diamingemisch<br>0,2500 | 0,41 | 0,54 | > 20 | - | < 0,5 |
| 9<br>Mol | BPDA<br>0,1500 | pDDS Diamingemisch<br>0,0625 0,0625 | IPC<br>0,2275 | pDDS<br>0,2500 | 0,85 | 0,67 | > 25 | 0,78 | ~ 1 |
| 10<br>Mol | BTDA<br>0,1250 | BADM<br>0,0938 | IPC<br>0,0938 | Diamingemisch<br>0,1250 | 0,56 | 0,54 | > 25 | - | < 0,5 |
| 11<br>Mol | BTDA<br>0,2500 | mDDS BEMA pDDS<br>0,0695 0,0695 0,0695 | IPC<br>0,3790 | mDDS BEMA pDDS<br>0,1389 0,1389 0,1389 | 0,48 | 0,40 | > 25 | 0,46 | ~ 1 |
| 12<br>Mol | BTDA<br>0,2500 | BEMA<br>0,1875 | IPC<br>0,1879 | BEMA<br>0,2500 | 0,49 | 0,51 | > 25 | - | < 0,5 |
| 13<br>Mol | TMAC<br>0,2500 | Diamingemisch<br>0,2920 | IPC<br>0,1690 | Diamingemisch<br>0,1250 | 0,67 | 0,59 | > 25 | - | < 0,5 |
| 14<br>Mol | BPDA<br>0,2500 | Diamingemisch<br>0,1875 | TMAC<br>0,1895 | Diamingemisch<br>0,2500 | 1,45 | 0,80 | > 25 | - | < 0,5 |

Beispiel 15: Herstellung einer Beschichtung nach dem erfindungsgemässen Verfahren

Eine Lösung des oben nach Beispiel 5 beschriebenen Polyamid-Polyimid-Blockcopolymeren mit 25-Gew.-% in NMP wird mittels einer Lackhantel (Höhe 200 µm) auf eine Kupferfolie aufgetragen. Die Hauptmenge des Lösungsmittels wird durch eine 15minütige IR-Bestrahlung entfernt. Die Polymerschicht eines so hergestellten Probestreifens lässt sich durch 30minütiges Eintauchen in NMP vollständig ablösen. Ein weiterer Probestreifen wird zusätzlich im Vakuum (15 mbar) innerhalb von 30 Minuten von Raumtemperatur auf 300 °C und bei dieser Temperatur weitere 30 Minuten erwärmt. Man erhält eine blasenfrei beschichtete, flexible Cu-Folie. Die so behandelte Folie wird gewogen, 30 Minuten in NMP getaucht und erneut gewogen. Es zeigt sich, dass die Beschichtung jetzt in NMP unlöslich ist. Es findet lediglich eine geringe Gewichtszunahme (0,7%) durch NMP statt, die reversibel ist und durch Trocknung wieder aufgehoben werden kann. Die Oberfläche der Beschichtung ist vor und nach NMP-Behandlung unverändert.

Beispiel 16:

Mit diesem Beispiel werden die guten mechanischen Eigenschaften eines nach dem erfindungsgemässen Verfahren hergestellten flexiblen Laminates gezeigt.

Mittels einer Lackhantel (200 µm) beschichtet man eine Kupferfolie mit einer 25 %igen Lösung des Blockcopolymeren gemäss Synthesebeispiel 1 in N-Methylpyrrolidon. Die Beschichtung wird mit IR-Strahlung (Heraeus Modell MBS 225/125) 45 Minuten lang getrocknet. Die beschichtete Folie wird sodann in 1 cm lange Streifen zerschnitten und das "Flex-Life" des Laminates bestimmt [= Zahl der Faltungen bis zum Bruch des Laminates mittels Universal-Model 2 FDF Flex Ductility Tester (Hersteller: Universal Manufacturing Co.) mit Zuggewicht 224 g und 2 mm Dorn ermittelt]. Dabei ergibt sich für 5 Prüfstreifen ein Mittelwert von 319 Cyclen.

**Ansprüche**

1. Verfahren zur Herstellung von vernetzten Polyamid-Polyimid Blockcopolymeren, dadurch gekennzeichnet, dass man ein lösliches Polyamid-Polyimid Blockcopolymer mit einem mittleren Molekulargewicht $M_n$ von 1'000-50'000 enthaltend Kombinationen von Blöcken der Formeln Ia mit IIb und/oder IIc oder der Formeln Ib mit IIa und/oder IIc oder der Formeln Ic mit IIa und/oder IIb auf Temperaturen oberhalb des Glasumwandlungspunktes erhitzt

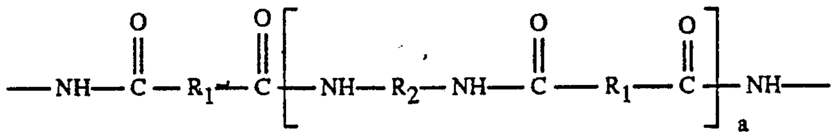 (Ia),

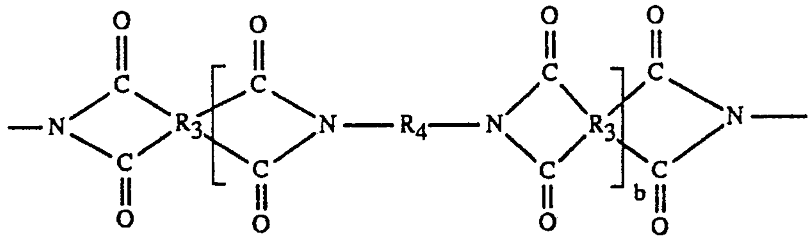 (Ib),

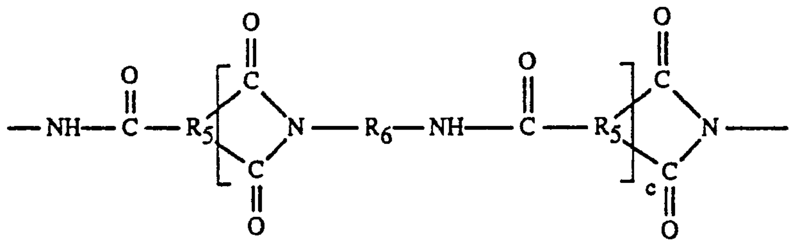 (Ic),

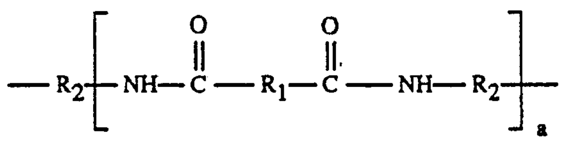 (IIa),

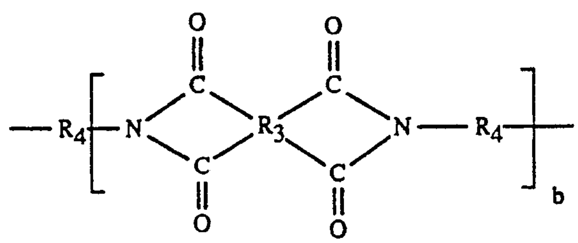 (IIb),

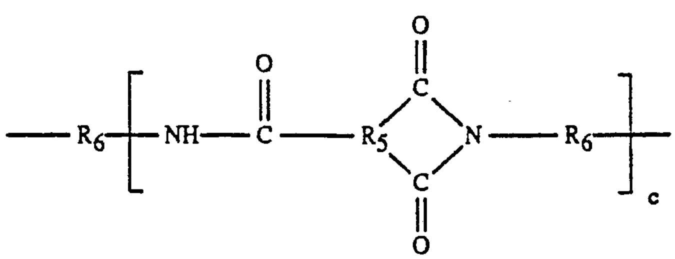 (IIc),

worin die Indizes a, b und c unabhängig voneinander ganze Zahlen von 1 bis 100 sind, $R_1$ ein Rest der Formeln $-C_nH_{2n}-$,

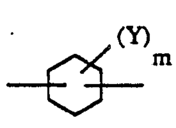 , 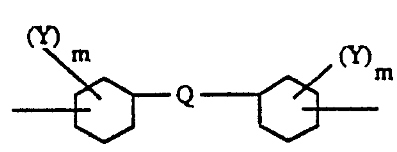 ,

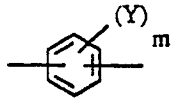 , 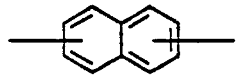 oder 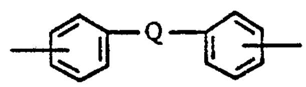

ist, n eine ganze Zahl von 2 bis 12 bedeutet, m eine ganze Zahl von 0 bis 4 ist, Y Alkyl oder Halogen ist oder worin jeweils zwei zueinander ortho-ständige Reste Y zusammen eine Alkylengruppe bilden, Q eine direkte Bindung darstellt oder $-CH_2-$, $-CH_2-CH_2-$, $-CH(CH_3)-$, $-C(CH_3)_2-$, $-C(CF_3)_2-$, -O-, -S-, $-SO_2-$ oder -CO- bedeutet, $R_2$ ein Rest der Formeln $-C_nH_{2n}-$,

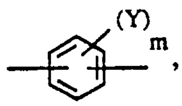, 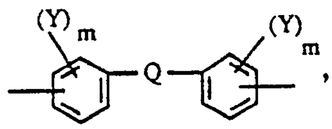, 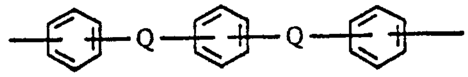,

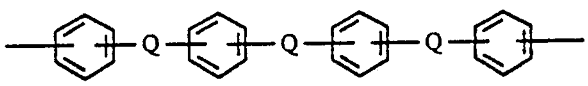, 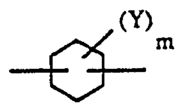, 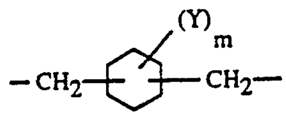,

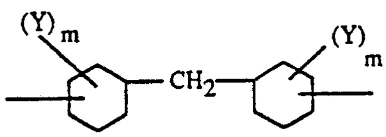, 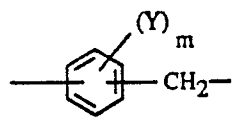 oder 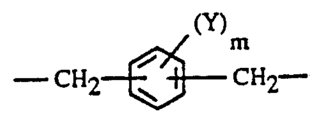

ist, n, m, Q und Y eine der oben definierten Bedeutungen besitzen, $R_3$ ein Rest der Formeln

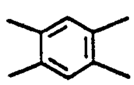 oder 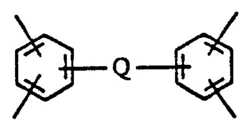

ist, worin Q eine der oben angegebenen Bedeutungen besitzt, $R_5$ ein Rest der Formel

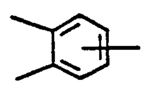

ist, und $R_4$ und $R_6$ unabhängig voneinander eine der für $R_2$ definierten Bedeutungen besitzen, mit der Massgabe, dass 10-100 Mol % aller Reste $R_2$, $R_4$ und $R_6$ bezogen auf die Gesamtmenge dieser Reste, die Formel

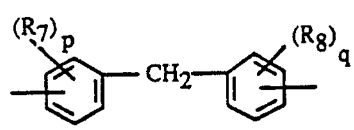

aufweisen, worin p 1 oder 2 und q 0, 1 oder 2 ist, $R_7$ und $R_8$ Alkyl bedeuten oder worin je zwei zueinander ortho-ständige Reste $R_7$ und $R_8$ jeweils zusammen eine Alkylengruppe bilden.

2. Verfahren gemäss Anspruch 1, dadurch gekennzeichnet, dass 50-100 Mol %, aller Reste $R_2$, $R_4$ und $R_6$, bezogen auf die Gesamtmenge dieser Reste, die Formel

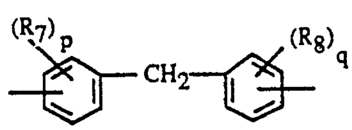

aufweisen, worin p 1 oder 2 und q 0, 1 oder 2 ist, $R_7$ und $R_8$ Alkyl bedeuten oder worin je zwei zueinander ortho-ständige Reste $R_7$ und $R_8$ jeweils zusammen eine Alkylengruppe bilden.

3. Verfahren gemäss Anspruch 1, dadurch gekennzeichnet, dass das Verhältnis von Amidgruppen zu Imidgruppen in den Polyamid-Polyimid Blockcopolymeren 4:1 bis 1:4 beträgt.

4. Verfahren gemäss Anspruch 1, dadurch gekennzeichnet, dass man von Polyamid-Polyimid Blockcopolymer ausgeht, die im wesentlichen aus Polyamidblöcken Ia und Polyimidblöcken IIb oder aus Polyamidblöcken IIa und Polyimidblöcken Ib bestehen.

5. Verfahren gemäss Anspruch 1, dadurch gekennzeichnet, dass Y, $R_7$ oder $R_8$ geradkettiges $C_1$-$C_6$Alkyl bedeuten.

6. Verfahren gemäss Anspruch 1, dadurch gekennzeichnet, dass Y, $R_7$ oder $R_8$ Methyl oder Ethyl bedeuten.

7. Verfahren gemäss Anspruch 1, dadurch gekennzeichnet, dass $R_1$ 1,3-Phenylen ist.

8. Verfahren gemäss Anspruch 1, dadurch gekennzeichnet, dass die alkylsubstituierten Reste des Diaminodiphenylmethans $R_2$ und/oder $R_4$ und/oder $R_6$ mindestens in einer ortho-Position zur Aminogruppe Alkylsubstituenten aufweisen.

9. Verfahren gemäss Anspruch 8, dadurch gekennzeichnet, dass die alkylsubstituierten Reste des Diaminodiphenylmethans $R_2$ und/oder $R_4$ und/oder $R_6$ in zwei ortho-Positionen zur Aminogruppe Alkylsubstituenten aufweisen.

10. Verfahren gemäss Anspruch 1, dadurch gekennzeichnet, dass $R_2$ und/oder $R_4$ und/oder $R_6$ 1,3-Phenylen,

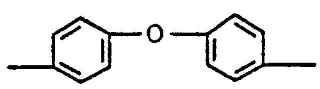 , 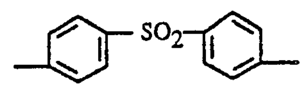 ,

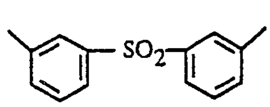 , 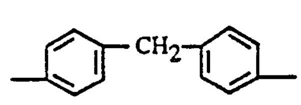 , 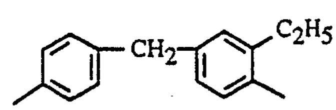 ,

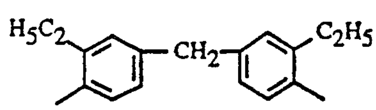 und 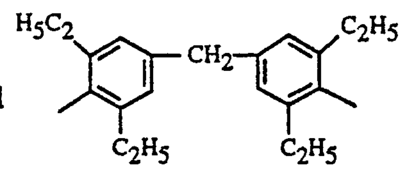

sind.

11. Verfahren gemäss Anspruch 1, dadurch gekennzeichnet, dass $R_3$ Reste der Formeln

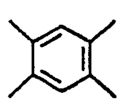 , 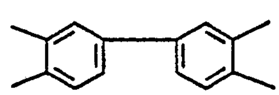 oder 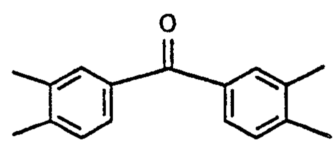

sind.

12. Verfahren gemäss Anspruch 11, dadurch gekennzeichnet, dass $R_3$ Reste der Formeln

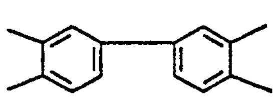 oder 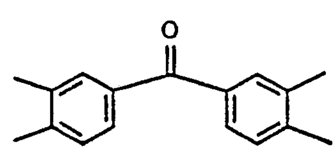

sind.

13. Verfahren gemäss Anspruch 1, dadurch gekennzeichnet, dass der Anteil der alkylsubstituierten Diaminodiphenylmethanreste in den Diaminresten $R_2$, $R_4$ und $R_6$ etwa 100 Mol %, bezogen auf die Gesamtmenge dieser Reste, beträgt.

14. Lösliche Polyamid-Polyimid Blockcopolymere mit einem mittleren Molekulargewicht $M_n$ von 1'000-50'000 enthaltend Kombinationen von Blöcken der Formeln Ia mit IIb und/oder IIc oder der Formeln Ib mit IIa und/oder IIc oder der Formeln Ic mit IIa und/oder IIb gemäss Anspruch 1 mit Ausnahme der Verbindungen, worin $R_3$ ein Rest der Benzophenontetracarbonsäure ist.

15. Verwendung der löslichen Blockcopolymeren gemäss Anspruch 1 zur Herstellung von Beschichtungen, Folien und flexiblen Laminaten oder als Klebstoffe, Matrixharze oder Pressmassen.